# EUROPEAN PATENT APPLICATION

(11) **EP 4 745 087 A1**
(43) Date of publication of application: **20.05.2026**
(21) Application number: 24914986.5
(22) Date of filing: 04.11.2024
(51) Int. Cl.: C01F 11/18, B82Y 40/00

(54) **NANO CALCIUM CARBONATE MICROCRYSTAL DISPERSION SYSTEM, AND PREPARATION METHOD THEREFOR AND USE THEREOF**

(30) Priority: 03.01.2024 CN 202410004014
(71) Applicant: Qingdao Lubemater Lubrication Materials Technology Co., Ltd., Qingdao City, Shandong Province 266000 (CN)
(72) Inventor: WANG, Xiaobo, Lanzhou, Gansu 730000 (CN); LIU, Weimin, Lanzhou, Gansu 730000 (CN); ZHAO, Gaiqing, Lanzhou, Gansu 730000 (CN); JIA, Qian, Lanzhou, Gansu 730000 (CN)
(74) Representative: E. Blum & Co. AG
(86) International application number: PCT/CN2024/129698
(87) International publication number: WO 2025/145770

(57) **Abstract**

The present application relates to the technical field of calcium carbonate preparation, and provides a nano calcium carbonate microcrystal dispersion system, and a preparation method therefor and a use thereof. In the present application, no volatile organic solvent is used, and the prepared nano calcium carbonate microcrystal dispersion system exhibits colloidal stability. First, a mixed reaction solution is provided, wherein the mixed reaction solution comprises the following components in parts by mass: 50-80 parts of an oily dispersion medium, 5-30 parts of a primary organic acid, 0.1-10 parts of a secondary organic acid, 0-10 parts of an inorganic acid, and 0-10 parts of an accelerant; the mixed reaction solution is mixed with a calcium-containing inorganic substance for a neutralization reaction to obtain a neutralization product feed liquid; carbon dioxide is introduced into the neutralization product feed liquid, a carbonization reaction is carried out between the carbon dioxide and the calcium-containing inorganic substance in the neutralization product feed liquid, and then water removal-stabilization treatment and homogenization treatment are sequentially carried out to obtain the nano calcium carbonate microcrystal dispersion system. The nano calcium carbonate microcrystal dispersion system prepared in the present application exhibits colloidal stability and is green and safe.

## Description

The present application claims priority to Chinese Patent Application No. CN202410004014.4, filed with the China National Intellectual Property Administration on January 03, 2024 and entitled "NANO CALCIUM CARBONATE MICROCRYSTAL DISPERSION SYSTEM, AND PREPARATION METHOD AND USE THEREOF", which is incorporated herein by reference in its entirety.

### TECHNICAL FIELD

The present disclosure relates to the technical field of calcium carbonate preparation, and in particular to a nano calcium carbonate microcrystal dispersion system, and a preparation method and use thereof.

### BACKGROUND

Compared with ordinary calcium carbonate, nano calcium carbonate exhibits changes in terms of the crystal structure and surface electronic structure, resulting in effects not seen in ordinary calcium carbonate, such as quantum size effect, small size effect, surface effect, and macroscopic quantum effect, and thus plays a significant role in industries such as plastics, rubber, inks, lubrication, coatings, adhesives, and papermaking. A dispersion system containing nano calcium carbonate microcrystals is widely used in cleaning agents, antirust agents, lubricating greases, shear-thickening fluids, and other fields. In oily media, nano calcium carbonate can exist in various forms such as calcite, vaterite, aragonite, and amorphous phases, and the properties of nano calcium carbonate differ significantly depending on the structure thereof. Natural limestone primarily consists of calcite structure, oil-dispersed nano calcite-type calcium carbonate has excellent non-Newtonian fluid characteristics, oil-dispersed nano vaterite-type calcium carbonate is less frequently reported in the literature, and oil-dispersed nano amorphous calcium carbonate serves as a primary component of high-base-number cleaning agents.

Industrial production of nano calcium carbonate primarily employs carbonization methods, such as intermittent carbonization, continuous spray carbonization, and supergravity carbonization. The nano calcium carbonates prepared using such methods are predominantly in a powder form, and dispersing the powder into oily media often adversely affects the uniformity and stability of the product. Chinese patent CN 103614903 A discloses a method for in-situ preparation of micro/nano calcium carbonate and a shear-thickening fluid thereof. The method specifically involves producing micro/nano calcium carbonate in situ from a dispersed phase of calcium acetate in a dispersion medium (one or more of ethylene glycol, polyethylene glycol, propylene glycol, and hydroxyl silicone oil), so as to obtain a micro/nano calcium carbonate shear-thickening fluid, which exhibits excellent dispersibility, stability, and shear-thickening performance. However, the method involves the high-temperature decomposition of calcium acetate to form calcium carbonate, which incurs relatively high costs and is less suitable for industrial-scale production. Chinese patent CN 113528215 A discloses a method for preparing high-DBN calcium sulfonate for lubricating greases. Chinese patent CN 101318915 A discloses a method for preparing a synthesized high-base-number (TBN 400) calcium alkylbenzene sulfonate. Chinese patent CN 103666647 A discloses a high-base-number calcium-magnesium naphthenate cleaning agent, and a preparation method thereof, and a lubricating oil composition. Chinese patent CN 104450118 A discloses a complex calcium sulfonate lubricating grease and a one-step preparation method thereof. However, in the aforementioned methods, volatile organic solvents are needed to overcome the mass transfer limitations inherent in the "gas-liquid-solid" three-phase mixed system, failing to meet the green environmental requirements and posing risks to safe production.

### SUMMARY

The present disclosure is to provide a nano calcium carbonate microcrystal dispersion system, a preparation method and use thereof. The method does not require use of volatile organic solvents and thus is green and safe, and the method employs in-situ synthesis, which achieves a high yield and results in a nano calcium carbonate microcrystal dispersion system with excellent colloidal stability.

In order to achieve the above object of the present disclosure, the present disclosure provides the following technical solutions.

The present disclosure provides a method for preparing a nano calcium carbonate microcrystal dispersion system, without using a volatile organic solvent, and the nano calcium carbonate microcrystal dispersion system exhibiting colloidal stability,
where the method includes the following steps:
providing a mixed reaction solution, where the mixed reaction solution includes the following components in parts by mass: 50 parts to 80 parts of an oily dispersion medium, 5 parts to 30 parts of a primary organic acid, 0.1 parts to 10 parts of a secondary organic acid, 0 parts to 10 parts of an inorganic acid, and 0 parts to 10 parts of an accelerant;
mixing the mixed reaction solution and a calcium-containing inorganic substance and conducting a neutralization reaction to obtain a neutralization product feed liquid, where the calcium-containing inorganic substance is selected from the group consisting of calcium hydroxide and calcium oxide; and
introducing carbon dioxide into the neutralization product feed liquid, subjecting the carbon dioxide and the calcium-containing inorganic substance in the neutralization product feed liquid to a carbonization reaction, and subjecting a resulting reaction product to a water removal-stabilization treatment (water removal and stabilization treatment) and a homogenization treatment in sequence to obtain the nano calcium carbonate microcrystal dispersion system.

In some embodiments, the oily dispersion medium includes at least one selected from the group consisting of a mineral oil, a polyalphaolefin, an alkyl naphthalene, a polyether, and an ester-based synthetic oil.

In some embodiments, the oily dispersion medium is selected from a group consisting of the mineral oil, the polyalphaolefin, the alkyl naphthalene, the polyether, and the ester-based synthetic oil.

In some embodiments, the oily dispersion medium is a blend of the mineral oil and the alkyl naphthalene, with a mass ratio of the mineral oil to the alkyl naphthalene being 1-10 : 1.

In some embodiments, the oily dispersion medium is a blend of the polyalphaolefin and the polyether, with a mass ratio of the polyalphaolefin to the polyether being 1-10 : 1.

In some embodiments, the oily dispersion medium is a blend of the polyalphaolefin and the ester-based synthetic oil, with a mass ratio of the polyalphaolefin to the ester-based synthetic oil being 5-20 : 1.

In some embodiments, the mineral oil has a viscosity of 40 mm/s to 500 mm/s.

In some embodiments, the alkyl naphthalene has a viscosity of 10 mm/s to 200 mm/s.

In some embodiments, the polyalphaolefin has a viscosity of 60 mm/s to 400 mm/s.

In some embodiments, the primary organic acid comprises at least one selected from the group consisting of an alkylbenzenesulfonic acid, naphthenic acid, oleic acid, and dodecanoic acid; the alkylbenzenesulfonic acid has an alkyl with a number of carbon atoms being 8 to 35; and the naphthenic acid has an alkyl with a number of the carbon atoms being 12 to 16.

In some embodiments, the alkylbenzenesulfonic acid is at least one selected from the group consisting of C₁₂ alkylbenzenesulfonic acid, C₂₀ alkylbenzenesulfonic acid, and C₂₄ alkylbenzenesulfonic acid.

In some embodiments, the alkylbenzenesulfonic acid is a blend of the C₁₂ alkylbenzenesulfonic acid and the C₂₀ alkylbenzenesulfonic acid, with a mass ratio of the C₁₂ alkylbenzenesulfonic acid to the C₂₀ alkylbenzenesulfonic acid being 0.5-9 : 1.

In some embodiments, the primary organic acid is selected from a group consisting of the alkylbenzenesulfonic acid, the naphthenic acid, the oleic acid, and the dodecanoic acid.

In some embodiments, the primary organic acid is a blend of the naphthenic acid and the oleic acid, with a mass ratio of the naphthenic acid to the oleic acid being 5-10 : 1.

In some embodiments, the secondary organic acid comprises at least one selected from the group consisting of 12-hydroxystearic acid, stearic acid, dimer acid, oxalic acid, acetic acid, butyric acid, succinic acid, tartaric acid, malic acid, benzoic acid, and salicylic acid.

In some embodiments, the secondary organic acid is selected from a group consisting of the 12-hydroxystearic acid, the stearic acid, the dimer acid, the oxalic acid, the acetic acid, the butyric acid, the succinic acid, the tartaric acid, the malic acid, the benzoic acid, and the salicylic acid.

In some embodiments, the secondary organic acid is a blend of the 12-hydroxystearic acid and the acetic acid, with a mass ratio of the 12-hydroxystearic acid to the acetic acid being 10 : 1-15.

In some embodiments, the secondary organic acid is a blend of the 12-hydroxystearic acid, the tartaric acid, and the acetic acid, with a mass ratio of the 12-hydroxystearic acid, the tartaric acid, and the acetic acid being 10 : 1-5 : 1-15.

In some embodiments, the secondary organic acid is a blend of the 12-hydroxystearic acid and the oxalic acid, with a mass ratio of the 12-hydroxystearic acid to the oxalic acid being 5 : 0.5-5.

In some embodiments, the inorganic acid comprises at least one selected from the group consisting of boric acid, phosphoric acid, and sulfuric acid.

In some embodiments, the accelerant comprises at least one selected from the group consisting of water, dodecanol, octadecanol, ethylene glycol, diethylene glycol, triethylene glycol, glycerol, and glucose.

In some embodiments, the accelerant is selected from a group consisting of the water, dodecanol, the octadecanol, the ethylene glycol, the diethylene glycol, the triethylene glycol, the glycerol, and the glucose.

In some embodiments, the accelerant is a blend of the ethylene glycol and the water, with a mass ratio of the ethylene glycol to the water being 1 : 1-5.

In some embodiments, the accelerant is a blend of the glycerol and the diethylene glycol, with a mass ratio of the glycerol to the diethylene glycol being 1 : 0.1-2.

In some embodiments, the accelerant is a blend of the glycerol and the water, with a mass ratio of the glycerol to the water preferably being 1 : 1-5.

In some embodiments, a mass of the calcium-containing inorganic substance is 10% to 30% of a mass of the mixed reaction solution; and
the neutralization reaction is conducted at a pressure of 0 MPa to 5 MPa and a temperature of 10°C to 95°C for 0.5 h to 4 h.

In some embodiments, under a condition that a total mass of the mixed reaction solution and the calcium-containing inorganic substance is in a range of 4 kg to 5 kg, the carbon dioxide is introduced at a flow rate of 1 L/min to 50 L/min; and
the carbonization reaction is conducted at a pressure of 0 MPa to 5 MPa and a temperature of 50°C to 95°C for 1 h to 60 h.

In some embodiments, the water removal-stabilization treatment includes:
heating a carbonized product system obtained after the carbonization reaction at a heating rate of 0.5°C/min to 2°C/min to 120°C to 180°C, and cooling a resulting heated product at a cooling rate of 0.5°C/min to 2°C/min to 80°C to 100°C.

In some embodiments, the homogenization treatment is conducted in a device selected from a group consisting of a homogenizer, a colloid mill, and a three-roll mill.

In some embodiments, under a condition that the homogenization treatment is conducted in the homogenizer, the homogenization treatment is conducted once at a pressure of 15 MPa to 30 MPa.

The present disclosure provides a nano calcium carbonate microcrystal dispersion system prepared by the method as described in the technical solutions above, where the nano calcium carbonate in the nano calcium carbonate microcrystal dispersion system has a particle size of 10 nm to 600 nm.

In some embodiments, the nano calcium carbonate in the nano calcium carbonate microcrystal dispersion system has the particle size of 100 nm to 600 nm.

In some embodiments, the nano calcium carbonate is selected from a group consisting of vaterite-type calcium carbonate and calcite-type calcium carbonate.

The present disclosure provides use of the nano calcium carbonate microcrystal dispersion system as described in the technical solutions above in lubricating greases, antirust agents, extreme-pressure anti-wear additives, or shear-thickening fluids.

The present disclosure provides a method for preparing a nano calcium carbonate microcrystal dispersion system, without using volatile organic solvent, and the nano calcium carbonate microcrystal dispersion system exhibiting colloidal stability, where the method includes the following steps: providing a mixed reaction solution, where the mixed reaction solution includes the following components in parts by mass: 50 parts to 80 parts of an oily dispersion medium, 5 parts to 30 parts of a primary organic acid, 0.1 parts to 10 parts of a secondary organic acid, 0 parts to 10 parts of an inorganic acid, and 0 parts to 10 parts of an accelerant; mixing the mixed reaction solution and a calcium-containing inorganic substance and conducting a neutralization reaction to obtain a neutralization product feed liquid, where the calcium-containing inorganic substance is calcium hydroxide and/or calcium oxide; introducing carbon dioxide into the neutralization product feed liquid, subjecting the carbon dioxide and the calcium-containing inorganic substance in the neutralization product feed liquid to a carbonization reaction, and subjecting a resulting reaction product to water removal-stabilization treatment and homogenization treatment in sequence to obtain the nano calcium carbonate microcrystal dispersion system. In the present disclosure, nano calcium carbonate is in-situ synthesized by using an oily dispersion medium as a reaction medium, no volatile organic solvent is required, the method is green and safe, and the resulting nano calcium carbonate microcrystal dispersion system exhibits excellent colloidal stability.

Further, in the present disclosure, by means of in-situ synthesis using an oily dispersion medium as a reaction medium, the preparation of a nano calcium carbonate microcrystal dispersion system is achieved. The method can allow the preparation of nano calcium carbonates of different structures, such as vaterite-type calcium carbonate or calcite-type calcium carbonate, exhibiting significant advantages in industrial applications, such as no by-product, high yield, low equipment requirements, low cost, and high safety.

### BRIEF DESCRIPTION OF THE DRAWINGS

FIG. 1 shows an electron micrograph of nano calcium carbonate prepared in Example 1;
FIG. 2 shows an electron micrograph of nano calcium carbonate prepared in Example 2;
FIG. 3 shows an electron micrograph of nano calcium carbonate prepared in Example 3;
FIG. 4 shows an electron micrograph of nano calcium carbonate prepared in Example 4;
FIG. 5 shows an electron micrograph of nano calcium carbonate prepared in Comparative Example 1;
FIG. 6 shows an electron micrograph of nano calcium carbonate prepared in Comparative Example 2; and
FIG. 7 shows infrared spectra of nano calcium carbonates prepared in Examples 1 to 4 and Comparative Examples 1 to 3.

### DETAILED DESCRIPTION OF THE EMBODIMENTS

The present disclosure provides a method for preparing a nano calcium carbonate microcrystal dispersion system, without using a volatile organic solvent, and the nano calcium carbonate microcrystal dispersion system exhibiting colloidal stability, where the method includes the following steps:
providing a mixed reaction solution, where the mixed reaction solution includes the following components in parts by mass: 50 parts to 80 parts of an oily dispersion medium, 5 parts to 30 parts of a primary organic acid, 0.1 parts to 10 parts of a secondary organic acid, 0 parts to 10 parts of an inorganic acid, and 0 parts to 10 parts of an accelerant;
mixing the mixed reaction solution and a calcium-containing inorganic substance and conducting a neutralization reaction to obtain a neutralization product feed liquid, where the calcium-containing inorganic substance is calcium hydroxide and/or calcium oxide; and
introducing carbon dioxide into the neutralization product feed liquid, subjecting the carbon dioxide and the calcium-containing inorganic substance in the neutralization product feed liquid to a carbonization reaction, and subjecting a resulting reaction product to a water removal-stabilization treatment and a homogenization treatment in sequence to obtain the nano calcium carbonate microcrystal dispersion system.

In the present disclosure, unless otherwise specified, all raw materials used are commercially available products well-known to those skilled in the art.

The method for preparing a nano calcium carbonate microcrystal dispersion system does not require the use of a volatile organic solvent and thus is green and safe. In the present disclosure, the volatile organic solvent refers specifically to a volatile solvent having a low flash point. In some embodiments, the volatile solvent has a flash point of lower than 100°C and a boiling point of lower than 150°C; and the volatile organic solvent includes, but is not limited to, at least one selected from the group consisting of methanol, ethanol, petroleum ether, xylene, n-butanol, and isopropanol. The method of the present disclosure is described in detail below.

In the present disclosure, a mixed reaction solution is provided, where the mixed reaction solution includes the following components in parts by mass: 50 parts to 80 parts of an oily dispersion medium, 5 parts to 30 parts of a primary organic acid, 0.1 parts to 10 parts of a secondary organic acid, 0 parts to 10 parts of an inorganic acid, and 0 parts to 10 parts of an accelerant. First, the mixed reaction solution is described in detail below.

In the present disclosure, the mixed reaction solution includes, in parts by mass, 50 parts to 80 parts of an oily dispersion medium, specifically may be 50 parts, 55 parts, 60 parts, 65 parts, 70 parts, 75 parts, or 80 parts. In some embodiments of the present disclosure, the oily dispersion medium includes at least one selected from the group consisting of a mineral oil, a polyalphaolefin, an alkyl naphthalene, a polyether, and an ester-based synthetic oil, more preferably the mineral oil, the polyalphaolefin, the alkyl naphthalene, the polyether, the ester-based synthetic oil, a blend of the mineral oil and the alkyl naphthalene, a blend of the polyalphaolefin and the polyether, or a blend of the polyalphaolefin and the ester-based synthetic oil. In some embodiments, under a condition that the oily dispersion medium is the blend of the mineral oil and the alkyl naphthalene, a mass ratio of the mineral oil to the alkyl naphthalene is in a range of 1-10 : 1, more preferably 1.5-5 : 1, further preferably 2 : 1. In some embodiments, under a condition that the oily dispersion medium is the blend of the polyalphaolefin and the polyether, a mass ratio of the polyalphaolefin to the polyether is in a range of 1-10 : 1, more preferably 4-6 : 1, further preferably 5 : 1. In some embodiments, under a condition that the oily dispersion medium is the blend of the polyalphaolefin and the ester-based synthetic oil, a mass ratio of the polyalphaolefin to the ester-based synthetic oil is in a range of 5-20 : 1, more preferably 8-12 : 1, further preferably 10 : 1. In some embodiments of the present disclosure, the mineral oil has a viscosity of 40 mm/s to 500 mm/s, more preferably 80 mm/s to 200 mm/s, further preferably 100 mm/s; and the mineral oil in the embodiments of the present disclosure is purchased from ExxonMobil. In some embodiments of the present disclosure, the polyalphaolefin has a viscosity of 60 mm/s to 400 mm/s, more preferably 65 mm/s to 200 mm/s, further preferably 70 mm/s to 100 mm/s; and the polyalphaolefin in the embodiments of the present disclosure is purchased from ExxonMobil. In some embodiments of the present disclosure, the alkyl naphthalene has a viscosity of 10 mm/s to 200 mm/s, more preferably 80 mm/s to 150 mm/s, further preferably 100 mm/s; and the alkyl naphthalene in the embodiments of the present disclosure is purchased from King Industries, Inc., U.S.A. The polyether in the embodiments of the present disclosure is purchased from Dow Chemical Company. In some embodiments, the ester-based synthetic oil polyether is purchased from Croda. In the present disclosure, the above-mentioned types of oily dispersion mediums are preferably used, such oily dispersion mediums have good solubility or dispersibility and can effectively dissolve or disperse the components, helping to maintain a uniform reaction system and ensure that the reaction proceeds smoothly, thereby finally resulting in a nano calcium carbonate microcrystal dispersion system with excellent stability.

In the present disclosure, the mixed reaction solution includes 5 parts to 30 parts of a primary organic acid, specifically may be 5 parts, 10 parts, 15 parts, 20 parts, 25 parts, or 30 parts, based on a mass parts of the oily dispersion medium. In some embodiments of the present disclosure, the primary organic acid includes at least one selected from the group consisting of an alkylbenzenesulfonic acid, naphthenic acid, oleic acid, and dodecanoic acid, specifically is the alkylbenzenesulfonic acid, the naphthenic acid, the oleic acid, or the dodecanoic acid, and is also a blend of the naphthenic acid and the oleic acid; and under a condition that the primary organic acid is a blend of the naphthenic acid and the oleic acid, a mass ratio of the naphthenic acid to the oleic acid is in a range of 5-10 : 1, more preferably 8-9.5 : 1, further preferably 9 : 1. In some embodiments of the present disclosure, a number of carbon atoms of an alkyl group in the alkylbenzenesulfonic acid is in a range of 8 to 35, and specifically is 8 to 14 (i.e., C₈₋₁₄ alkylbenzenesulfonic acids), and 16 to 35 (i.e., C₁₆₋₃₅ alkylbenzenesulfonic acids), and the alkylbenzenesulfonic acid is further preferably at least one selected from the group consisting of C₁₂ alkylbenzenesulfonic acid, C₂₀ alkylbenzenesulfonic acid, and C₂₄ alkylbenzenesulfonic acid, and specifically is a blend of the C₁₂ alkylbenzenesulfonic acid and the C₂₀ alkylbenzenesulfonic acid, and is also the C₂₄ alkylbenzenesulfonic acid. In some embodiments, under the condition that the alkylbenzenesulfonic acid is the blend of the C₁₂ alkylbenzenesulfonic acid and the C₂₀ alkylbenzenesulfonic acid, a mass ratio of the C₁₂ alkylbenzenesulfonic acid to the C₂₀ alkylbenzenesulfonic acid is in a range of 0.5-9 : 1, more preferably 0.8-2 : 1, further preferably 1 : 1. The alkylbenzenesulfonic acid in some embodiments of the present disclosure is purchased from Jintung Petrochemical Crop., Ltd. In some embodiments of the present disclosure, a number of carbon atoms of an alkyl in the naphthenic acid is in a range of 16 to 20; and the naphthenic acid in the embodiments of the present disclosure is purchased from Shanghai Aladdin Biochemical Technology Co., Ltd, China. The oleic acid in some embodiments of the present disclosure is purchased from Shanghai Aladdin Biochemical Technology Co., Ltd, China; and the dodecanoic acid is purchased from Jintung Petrochemical Crop., Ltd. In the present disclosure, the above-mentioned types of primary organic acids are preferably used, such primary organic acids can react with a calcium-containing inorganic substance (calcium hydroxide and/or calcium oxide) to form a calcium organic acid salt, which is a surfactant having a hydrophilic end (i.e., polar end) and a lipophilic end (i.e., non-polar end). During the subsequent carbonization reaction, the calcium-containing inorganic substance present in the neutralization product feed liquid reacts with carbon dioxide to form calcium carbonate, and the polar end of the calcium organic acid salt adsorbs to the calcium carbonate surface, forming a micelle, and the non-polar end orients outward and integrates with the oily dispersion medium of the system, ultimately resulting in a stable nano calcium carbonate microcrystal dispersion system.

In the present disclosure, the mixed reaction solution includes 0.1 parts to 10 parts of a secondary organic acid, specifically 0.1 parts, 0.5 parts, 1 part, 1.5 parts, 2 parts, 2.5 parts, 3 parts, 3.5 parts, 4 parts, 4.5 parts, 5 parts, 5.5 parts, 6 parts, 6.5 parts, 7 parts, 7.5 parts, 8 parts, 8.5 parts, 9 parts, 9.5 parts or 10 parts, based on the mass parts of the oily dispersion medium. In some embodiments of the present disclosure, the secondary organic acid includes at least one selected from the group consisting of 12-hydroxystearic acid, stearic acid, dimer acid, oxalic acid, acetic acid, butyric acid, succinic acid, tartaric acid, malic acid, benzoic acid, and salicylic acid, specifically is the 12-hydroxystearic acid, the stearic acid, the dimer acid, the oxalic acid, the acetic acid, the butyric acid, the succinic acid, the tartaric acid, the malic acid, the benzoic acid, or the salicylic acid, is a blend of the 12-hydroxystearic acid and the acetic acid, or a blend of the 12-hydroxystearic acid, the tartaric acid, and the acetic acid, and is also a blend of the 12-hydroxystearic acid and the oxalic acid. In some embodiments, under a condition that the secondary organic acid is the blend of the 12-hydroxystearic acid and the acetic acid, a mass ratio of the 12-hydroxystearic acid to the acetic acid is in a range of 10 : 1-15, more preferably 10 : 1.5-5, further preferably 10 : 2-3. In some embodiments, under a condition that the secondary organic acid is the blend of the 12-hydroxystearic acid, the tartaric acid, and the acetic acid, a mass ratio of the 12-hydroxystearic acid, the tartaric acid, and the acetic acid is in a range of 10 : 1-5 : 1-15, more preferably 10 : 4-5 : 1.2-3, further preferably 10 : 5 : 1.5. In some embodiments, under a condition that the secondary organic acid is the blend of the 12-hydroxystearic acid and the oxalic acid, a mass ratio of the 12-hydroxystearic acid to the oxalic acid is preferably 5 : 0.5-5, more preferably 5 : 0.8-2, further preferably 5 : 1. In the present disclosure, the above-mentioned types of secondary organic acids are preferably used, such secondary organic acids can assist the primary organic acid in achieving a rapid reaction, helping to maintain a stable reaction system, thereby finally resulting in a nano calcium carbonate microcrystal dispersion system with excellent stability.

In the present disclosure, the mixed reaction solution includes 0 parts to 10 parts of an inorganic acid, specifically is 0.1 parts, 0.5 parts, 1 part, 1.5 parts, 2 parts, 2.5 parts, 3 parts, 3.5 parts, 4 parts, 4.5 parts, 5 parts, 5.5 parts, 6 parts, 6.5 parts, 7 parts, 7.5 parts, 8 parts, 8.5 parts, 9 parts, 9.5 parts or 10 parts, based on the mass parts of the oily dispersion medium. In some embodiments of the present disclosure, the inorganic acid preferably includes at least one selected from the group consisting of boric acid, phosphoric acid, and sulfuric acid, more preferably the boric acid, the phosphoric acid, or the sulfuric acid. In the present disclosure, the above-mentioned types of inorganic acids are preferably used, such inorganic acids can assist the primary organic acid in achieving a rapid reaction, helping to maintain a stable reaction system, thereby finally resulting in a nano calcium carbonate microcrystal dispersion system with excellent stability.

In the present disclosure, the mixed reaction solution includes 0 parts to 10 parts of an accelerant, specifically is 0.1 parts, 0.5 parts, 1 part, 1.5 parts, 2 parts, 2.5 parts, 3 parts, 3.5 parts, 4 parts, 4.5 parts, 5 parts, 5.5 parts, 6 parts, 6.5 parts, 7 parts, 7.5 parts, 8 parts, 8.5 parts, 9 parts, 9.5 parts or 10 parts, based on the mass parts of the oily dispersion medium. In some embodiments of the present disclosure, the accelerant includes at least one selected from the group consisting of water, dodecanol, octadecanol, ethylene glycol, diethylene glycol, triethylene glycol, glycerol, and glucose, specifically is at least one selected from the group consisting of the water, the dodecanol, the octadecanol, the ethylene glycol, the diethylene glycol, the triethylene glycol, the glycerol, and the glucose, is a blend of the ethylene glycol and the water, or is a blend of the glycerol and the diethylene glycol, and is also a blend of the glycerol and the water. When the accelerant is a blend of ethylene glycol and water, the mass ratio of the ethylene glycol to the water is preferably 1 : 1-5, more preferably 1 : 1.5-2.5, further preferably 1 : 2. In some embodiments, under a condition that the accelerant is the blend of the glycerol and the diethylene glycol, a mass ratio of the glycerol to the diethylene glycol is in a range of 1 : 0.1-2, more preferably 1 : 0.5-1.5, further preferably 1 : 1. In some embodiments, under a condition that the accelerant is the blend of the glycerol and the water, a mass ratio of the glycerol to the water is in a range of 1 : 1-5, more preferably 1 : 1.5-2.5, further preferably 1 : 2. In the present disclosure, the accelerant may act as a catalyst for a solid-liquid-gas three-phase reaction system, favoring an increase in the reaction rate. In the present disclosure, the above-mentioned types of small-molecule polar compounds are preferably used as an accelerant, which are conducive to increasing the reaction speed of the reaction system and improving the reaction effect.

In some embodiments of the present disclosure, components of the mixed reaction solution are mixed to obtain the mixed reaction solution. In the present disclosure, there are no limitations on the order of addition of the components of the mixed reaction solution and the mixing method, as long as the components can be fully dispersed or dissolved. In an embodiment of the present disclosure, the components are mixed until uniform, particularly under stirring and/or heating conditions, to obtain the mixed reaction system.

In the present disclosure, after the mixed reaction solution is obtained, the mixed reaction solution and a calcium-containing inorganic substance are mixed and subjected to a neutralization reaction to obtain a neutralization product feed liquid, where the calcium-containing inorganic substance is calcium hydroxide and/or calcium oxide. In some embodiments of the present disclosure, a mass of the calcium-containing inorganic substance is 10% to 30%, more preferably 13% to 25%, further preferably 14% to 24%, more further preferably 16% to 22%, and still further preferably 17% to 21% of a mass of the mixed reaction solution. In some embodiments of the present disclosure, the calcium-containing inorganic substance is added to the mixed reaction solution; and more preferably, the calcium-containing inorganic substance is added portionwise to the mixed reaction solution to ensure rapid and uniform dispersion of materials. In the present disclosure, there are no limitations on the number of additions and the amount per addition of the calcium-containing inorganic substance. In some embodiments of the present disclosure, the neutralization reaction is conducted at a pressure of 0 MPa to 5 MPa, more preferably 0.05 MPa to 2 MPa, further preferably 0.08 MPa to 1 MPa, still further preferably 0.1 MPa to 0.6 MPa; the neutralization reaction is conducted at a temperature of 10°C to 95°C, more preferably 30°C to 80°C, further preferably 40°C to 60°C, still further preferably 50°C; and the neutralization reaction is conducted for 0.5 h to 4 h, more preferably 1 h to 2 h. In the present disclosure, the neutralization reaction may be conducted at a high temperature, which is beneficial for increasing the reaction rate. In the present disclosure, during the neutralization reaction, the organic acid reacts with a calcium-containing inorganic substance (calcium hydroxide and/or calcium oxide) to form a calcium organic acid salt, which is a surfactant having a hydrophilic end (i.e., polar end) and a lipophilic end (i.e., non-polar end). During the subsequent carbonization reaction, the calcium-containing inorganic substance present in the neutralization product feed liquid (before the neutralization reaction, an excess initial amount of the calcium-containing inorganic substance is charged; alternatively, an additional amount of the calcium-containing inorganic substance is introduced after the neutralization reaction; and in the case where the calcium-containing inorganic substance is calcium oxide, calcium oxide reacts with water in the system to form calcium hydroxide, which subsequently participates in the carbonization reaction) reacts with carbon dioxide to form calcium carbonate, and the polar end of the calcium organic acid salt adsorbs to the calcium carbonate surface, forming a micelle, and the non-polar end orients outward and integrates with the oily dispersion medium of the system, ultimately resulting in a stable nano calcium carbonate microcrystal dispersion system.

In the present disclosure, after the neutralization product feed liquid is obtained, carbon dioxide is introduced into the neutralization product feed liquid, the carbon dioxide and the calcium-containing inorganic substance in the neutralization product feed liquid are subjected to a carbonization reaction, and a resulting reaction product is subjected to water removal-stabilization treatment and homogenization treatment in sequence to obtain the nano calcium carbonate microcrystal dispersion system. In some embodiments of the present disclosure, under a condition that a total mass of the mixed reaction solution and the calcium-containing inorganic substance is 4 kg to 5 kg, the carbon dioxide is introduced at a flow rate of 1 L/min to 50 L/min, more preferably 3 L/min to 40 L/min, still preferably 5 -L/min to 30 L/min, further preferably 8 L/min to 20 L/min, still further preferably 10 L/min to 12 L/min. In an embodiment of the present disclosure, the carbon dioxide is introduced into the neutralization product feed liquid, in particular by using a gas dispersion device. In some embodiments of the present disclosure, the carbonization reaction is conducted at a pressure of 0 MPa to 5 MPa, more preferably 0.05 MPa to 3 MPa, further preferably 0.08 MPa to 2 MPa, still further preferably 0.1 MPa to 1 MPa; the carbonization reaction is conducted at a temperature of preferably 50°C to 95°C, more preferably 60°C to 85°C, further preferably 70°C to 80°C; and the carbonization reaction is conducted for 1 h to 60 h, more preferably 3 h to 40 h, still preferably 5 h to 30 h, further preferably 8 h to 20 h, and still further preferably 13 h to 18 h. In the present disclosure, during the carbonization reaction, the infrared and the base number of the reaction system are periodically detected, and the introduction of carbon dioxide is stopped when the base number reaches 0 to 20, marking the end of the carbonization reaction and obtaining a carbonization product feed liquid. In the present disclosure, it is preferable to monitor the reaction system by infrared spectroscopy to determine whether calcium carbonate is formed in the reaction system and to track the structural change thereof. In the present disclosure, the carbonization reaction may be carried out at a high temperature, which is beneficial for increasing the reaction rate. In the present disclosure, during the carbonization reaction, the calcium hydroxide in the system acts to in-situ capture carbon dioxide to produce nano calcium carbonate.

In the present disclosure, after the carbonization reaction, a resulting carbonization product feed liquid is subjected to a water removal-stabilization treatment and a homogenization treatment in sequence to obtain the nano calcium carbonate microcrystal dispersion system. In some embodiments of the present disclosure, the water removal-stabilization treatment includes: heating a carbonized product system obtained after the carbonization reaction at a heating rate of 0.5°C/min to 2°C/min to 120°C to 180°C, and then cooling a resulting heated product at a cooling rate of 0.5°C/min to 2°C/min to 80°C to 100°C. In some embodiments of the present disclosure, the heating rate is 0.5°C/min to 2°C/min, more preferably 1°C/min to 1.5°C/min, further preferably 1°C/min to 1.2°C/min; and the heating is conducted under atmospheric pressure conditions. During the heating, water (including water generated during the reaction or added as the accelerant) from the carbonization product feed liquid is removed, and the heating has a stabilizing effect on the structure of the formed nano calcium carbonate. In the present disclosure, the heating rate is preferably controlled within the aforementioned ranges, which is conducive to ensuring production safety, as an excessively rapid heating rate may cause a risk of reactor overflow. In some embodiments of the present disclosure, a resulting system is heated at the heating rate described above to 120°C to 180°C, further preferably to 150°C to 160°C, still further preferably to 140°C. If the temperature is too high, the material is prone to high-temperature oxidation, and the energy consumption will be high; and if the temperature is too low, it may result in a slow dehydration rate and potentially insufficient water removal. In some embodiments of the present disclosure, the cooling rate is 0.5°C to 2°C, more preferably 1°C to 1.5°C; a resulting heated material is cooled to a temperature of 80°C to 100°C, more preferably 80°C to 90°C. In the present disclosure, the resulting system is preferably cooled at the rate as described above, and the high cooling efficiency prevents material oxidation caused by prolonged exposure to high temperatures. In the present disclosure, after the water removal-stabilization treatment, a resulting feed liquid is subjected to homogenization treatment, which can refine the feed liquid into a uniform and consistent nano calcium carbonate microcrystal dispersion system. In some embodiments of the present disclosure, a feed liquid obtained after the water removal-stabilization treatment is homogenized by using a homogenizer, a colloid mill, or a three-roll mill. In an embodiment of the present disclosure, taking homogenization treatment by using the homogenizer as an example, the homogenization treatment is conducted at a pressure of 15 MPa to 30 MPa, more preferably 20 MPa to 25 MPa; and the homogenization treatment is conducted once.

The present disclosure provides a nano calcium carbonate microcrystal dispersion system prepared by the method as described in the technical solutions above, the nano calcium carbonate in the nano calcium carbonate microcrystal dispersion system having a particle size of 10 nm to 600 nm, which specifically may be 100 nm to 200 nm, 100 nm to 500 nm, or 400 nm to 600 nm. In some embodiments of the present disclosure, the nano calcium carbonate is selected from a group consisting of vaterite-type calcium carbonate and calcite-type calcium carbonate; the vaterite-type calcium carbonate has a particle size of 100 nm to 500 nm, more preferably 100 nm to 200 nm; and the calcite-type calcium carbonate has a particle size of 100 nm to 200 nm. In the present disclosure, the nano calcium carbonate microcrystal dispersion system exhibits good colloidal stability, and when the nano calcium carbonate is vaterite-type calcium carbonate or calcite-type calcium carbonate, the nano calcium carbonate microcrystal dispersion system has a non-Newtonian fluid characteristic.

The present disclosure provides use of the nano calcium carbonate microcrystal dispersion system as described in the technical solutions above in lubricating greases, antirust agents, extreme-pressure anti-wear additives, or shear-thickening fluids. In the present disclosure, there are no limitations on the specific application mode of the nano calcium carbonate microcrystal dispersion system and any application mode that is well known to those skilled in the art may be used.

The technical solutions in the present disclosure will be described clearly and completely below with reference to the examples of the present disclosure. Apparently, the described examples are merely some rather than all of the examples of the present disclosure. Based on the examples of the present disclosure, all other examples that would have been obtained by those of ordinary skill in the art without any creative efforts shall fall within the scope of the present disclosure.

The source of some of the raw materials in the following examples and comparative examples is as follows:

A mineral oil was purchased from ExxonMobil; a polyalphaolefin was purchased from ExxonMobil; an alkyl naphthalene was purchased from King Industries, Inc., U.S.A.; a polyether was purchased from Dow Chemical Company; an ester-based synthetic oil polyether was purchased from Croda; an alkylbenzenesulfonic acid was purchased from Jintung Petrochemical Crop., Ltd., China; naphthenic acid was purchased from Shanghai Aladdin Biochemical Technology Co., Ltd., China; oleic acid was purchased from Shanghai Aladdin Biochemical Technology Co., Ltd., China; and dodecanoic acid was purchased from Jintung Petrochemical Crop., Ltd., China.

### Example 1

(1) 2000 g of a mineral oil having a viscosity of 100 mm/s, and 1000 g of an alkyl naphthalene having a viscosity of 100 mm/s were added to a reaction kettle, and then 200 g of C₁₂ alkylbenzenesulfonic acid, 200 g of C₂₀ alkylbenzenesulfonic acid, 150 g of 12-hydroxystearic acid, 75 g of boric acid, and 40 g of water were added thereto in sequence, and a resulting mixture was stirred until components were dissolved and dispersed uniformly to obtain a mixed reaction solution.
(2) The mixed reaction solution was heated to 50°C, 500 g of calcium hydroxide was added portionwise thereto. A resulting system was stirred and mixed until uniform and subjected to a neutralization reaction at atmospheric pressure (specifically, 1 atm, 0.1013 MPa) and 50°C for 2 h to obtain a neutralization product feed liquid.
(3) Carbon dioxide was introduced into the neutralization product feed liquid at a rate of 8 L/min at atmospheric pressure. A carbonization reaction was conducted, where a system temperature was controlled to 85°C throughout an 8-hour gas introduction process. At the end of gas introduction, a resulting system was heated to a temperature of 140°C at a heating rate of 1°C/min to remove water from the resulting system, and then cooled to 80°C at a cooling rate of 1°C/min. A resulting feed liquid was homogenized once by using a homogenizer at a pressure of 25 MPa to obtain a nano calcium carbonate microcrystal dispersion system with a stable structure and a non-Newtonian fluid characteristic.

### Example 2

(1) 2000 g of a mineral oil having a viscosity of 100 mm/s was added to a reaction kettle, and then 1000 g of C₂₀ alkylbenzenesulfonic acid, 100 g of 12-hydroxystearic acid, 20 g of ethylene glycol, 40 g of water, 30 g of acetic acid, and 30 g of phosphoric acid were added thereto in sequence. A resulting mixture was stirred until components were dissolved and dispersed uniformly to obtain a mixed reaction solution.
(2) The mixed reaction solution was heated to 50°C, 800 g of calcium hydroxide was added thereto. A resulting system was stirred and mixed until uniform and subjected to a neutralization reaction at atmospheric pressure and 50°C for 1 h to obtain a neutralization product feed liquid.
(3) Carbon dioxide was introduced into the neutralization product feed liquid at a rate of 12 L/min at atmospheric pressure. A carbonization reaction was conducted, where a system temperature was controlled to 70°C throughout a 13-hour gas introduction process. At the end of gas introduction, a resulting system was heated to a temperature of 180°C at a heating rate of 1.2°C/min to remove water from the resulting system, and then cooled to 80°C at a cooling rate of 1°C/min. A resulting feed liquid was homogenized once by using a homogenizer at a pressure of 25 MPa to obtain a nano calcium carbonate microcrystal dispersion system with a stable structure and a non-Newtonian fluid characteristic.

### Example 3

(1) 2500 g of a polyalphaolefin having a viscosity of 70 mm/s and 500 g of polyether were added to a reaction kettle, and then 700 g of C₂₄ alkylbenzenesulfonic acid, 100 g of 12-hydroxystearic acid, 50 g of tartaric acid, 15 g of sulfuric acid, 15 g of acetic acid, 10 g of glycerol, and 10 g of diethylene glycol were added thereto in sequence. A resulting mixture was and stirred until components were dissolved and dispersed uniformly to obtain a mixed reaction solution.
(2) The mixed reaction solution was heated to 50°C, 650 g of calcium hydroxide was added thereto. A resulting system was stirred and mixed until uniform and subjected to a neutralization reaction at atmospheric pressure and 50°C for 2 h to obtain a neutralization product feed liquid.
(3) Carbon dioxide was introduced into the neutralization product feed liquid at a rate of 8 L/min at atmospheric pressure. A carbonization reaction was conducted, where a system temperature was controlled to 85°C throughout an 18-hour gas introduction process. At the end of gas introduction, a resulting system was heated to a temperature of 160°C at a heating rate of 1°C/min to remove water from the resulting system, and then cooled to 80°C at a cooling rate of 1°C/min. A resulting feed liquid was homogenized once by using a homogenizer at a pressure of 25 MPa to obtain a nano calcium carbonate microcrystal dispersion system with a stable structure and a non-Newtonian fluid characteristic.

### Example 4

(1) 2000 g of a polyalphaolefin having a viscosity of 100 mm/s and 200 g of an ester-based synthetic oil were added to a reaction kettle, and then 900 g of C₁₆₋₂₀ naphthenic acid, 100 g of oleic acid, 150 g of 12-hydroxystearic acid, 30 g of oxalic acid, 30 g of sulfuric acid, and 40 g of water were added thereto in sequence. A resulting mixture was stirred until components were dissolved and dispersed uniformly to obtain a mixed reaction solution.
(2) The mixed reaction solution was heated to 50°C, 750 g of calcium hydroxide was added thereto. A resulting system was stirred and mixed until uniform and subjected to a neutralization at a pressure of 0.6 MPa and a temperature of 50°C for 1 h to obtain a neutralization product feed liquid.
(3) Carbon dioxide was introduced into the neutralization product feed liquid at a rate of 8 L/min at a pressure of 1 MPa. A carbonization reaction was conducted, where a system temperature was controlled to 80°C throughout an 8-hour gas introduction process. At the end of gas introduction, a resulting system was heated at atmospheric pressure to a temperature of 140°C at a heating rate of 1°C/min to remove water from the resulting system, and then cooled to 80°C at a cooling rate of 1°C/min. A resulting feed liquid was homogenized once by using a homogenizer at a pressure of 25 MPa to obtain a nano calcium carbonate microcrystal dispersion system with a stable structure and a non-Newtonian fluid characteristic.

### Comparative Example 1

(1) 2000 g of a mineral oil having a viscosity of 100 mm/s, and 1000 g of a polyalphaolefin having a viscosity of 100 mm/s were added to a reaction kettle, and then 1000 g of C₂₀₋₂₄ alkylbenzenesulfonic acids, 400 g of petroleum ether, 75 g of boric acid, 40 g of water, and 150 g of methanol were added thereto in sequence. A resulting mixture was stirred until components were dissolved and dispersed uniformly to obtain a mixed solution.
(2) The mixed solution was heated to 50°C, 500 g of calcium hydroxide was added thereto. A resulting system was stirred and mixed until uniform and subjected to a neutralization reaction at 50°C for 2 h to obtain a neutralization product feed liquid.
(3) Carbon dioxide was introduced into the neutralization product feed liquid at a rate of 8 L/min, where a system temperature was controlled to 45°C throughout a 10-hour gas introduction process. At the end of the gas introduction, a resulting system was heated to a temperature of 140°C at a heating rate of 1°C/min to remove water from the resulting system, and then cooled to 80°C at a cooling rate of 1°C/min. A resulting feed liquid was homogenized once by using a homogenizer at a pressure of 25 MPa to obtain a nano calcium carbonate dispersion system with a non-Newtonian fluid characteristic.

### Comparative Example 2

(1) 1500 g of a mineral oil having a viscosity of 100 mm/s, and 1500 g of a polyalphaolefin having a viscosity of 100 mm/s were added to a reaction kettle, and then 1000 g of high-base-number calcium carbonate (with a base number of 400 DBN), 100 g of water, 100 g of C₁₂ alkylbenzenesulfonic acid, 30 g of n-butanol, 30 g of acetic acid, and 150 g of methanol were added thereto in sequence. A resulting mixture was stirred until components were dissolved and dispersed uniformly. A resulting mixed solution was heated to 85°C and held at the temperature, and subjected to crystal form conversion for 2 h.
(2) At the end of the crystal form conversion, a resulting system was heated to 100°C, and then 100 g of calcium hydroxide, 30 g of boric acid, and 60 g of 12-hydroxystearic acid were added thereto. A resulting mixture was stirred until uniform and subjected to a reaction at 100°C for 1 h.
(3) After the reaction, a resulting system was heated to a temperature of 160°C at a heating rate of 1°C/min to remove water from the resulting system, and then cooled to 80°C at a cooling rate of 1°C/min. A resulting feed liquid was homogenized once by using a homogenizer at a pressure of 25 MPa to obtain a nano calcium carbonate dispersion system with a non-Newtonian fluid characteristic.

### Comparative Example 3

(1) 800 g of a mineral oil having a viscosity of 30 mm/s was added to a reaction kettle, and then 1200 g of heavy alkylbenzenesulfonic acid (with a number of carbon atoms of an alkyl being 18 to 24), 160 g of methanol, and 2000 g of calcium hydroxide were added thereto in sequence. A resulting mixture was stirred until components were dissolved and dispersed uniformly. A resulting mixed solution was heated to 45°C and held at the temperature, and subjected to a reaction for 0.5 h.
(2) After completion of the reaction, carbon dioxide was introduced into a resulting system at a rate of 2 L/min, samples were taken to test the base number during gas introduction, and the gas introduction was stopped when the base number reached 350 or higher.
(3) After the gas introduction was completed, a resulting system was centrifuged. A resulting liquid mixture was heated to 110°C and subjected to flash evaporation to remove solvent and water, cooled and then filtered. A resulting filtrate was collected as a nano calcium carbonate dispersion system with Newtonian characteristics.

### Characterization and performance test

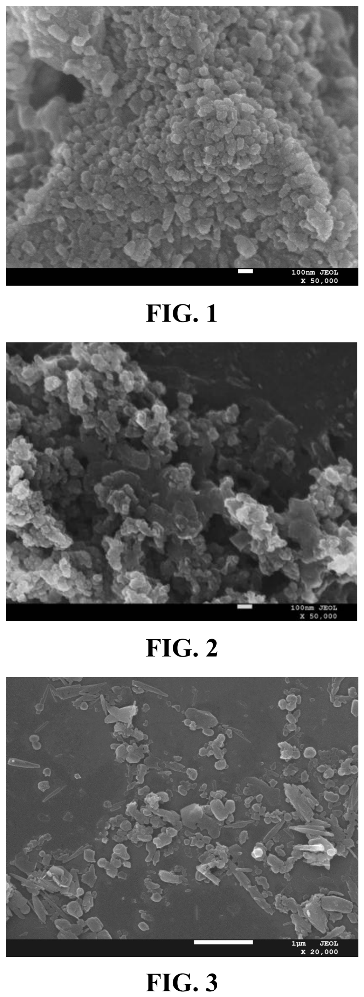

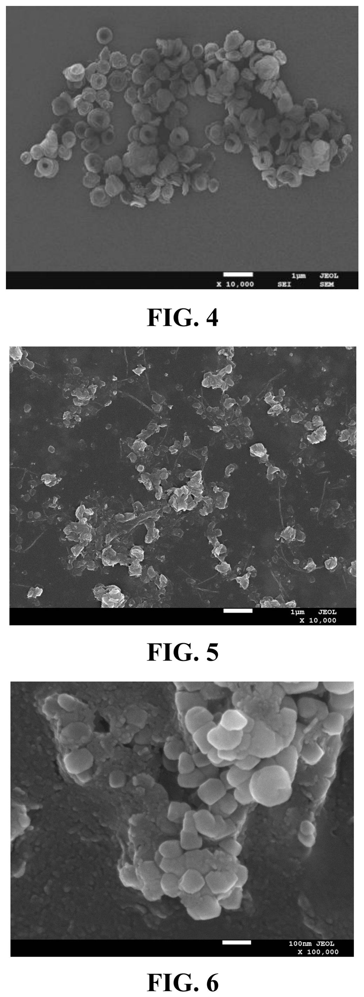

FIG. 1 shows an electron micrograph of nano calcium carbonate prepared in Example 1, FIG. 2 shows an electron micrograph of nano calcium carbonate prepared in Example 2, FIG. 3 shows an electron micrograph of nano calcium carbonate prepared in Example 3, FIG. 4 shows an electron micrograph of nano calcium carbonate prepared in Example 4, FIG. 5 shows an electron micrograph of nano calcium carbonate prepared in Comparative Example 1, and FIG. 6 shows an electron micrograph of nano calcium carbonate prepared in Comparative Example 2. The particle sizes of the nano calcium carbonates prepared in Examples 1 to 4 and Comparative Examples 1 to 3 are specifically shown in Table 1. The results show that the nano calcium carbonates prepared by using the method according to the present disclosure have uniform particle sizes, with good controllability, and the nano calcium carbonates prepared by using the methods in Comparative Examples 1 to 3 also have relatively uniform particle sizes.

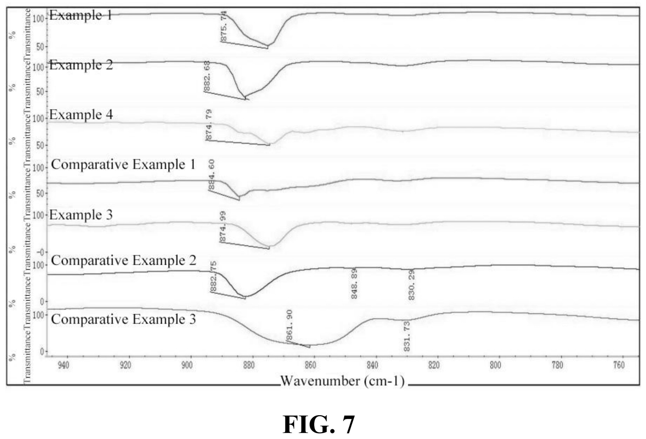

FIG. 7 shows infrared spectra of nano calcium carbonates prepared in Examples 1 to 4 and Comparative Examples 1 to 3. The position of the infrared characteristic peaks of the nano calcium carbonates prepared in Examples 1 to 4 and Comparative Examples 1 to 3 are specifically shown in Table 1. The results show that nano calcium carbonates with different structures indicated by distinct infrared characteristic peak positions, allowing for clear differentiation. For instance, the vaterite-type calcium carbonate prepared in Examples 1, 3, and 4 exhibits an infrared characteristic peak at 875 cm⁻¹ to 876 cm⁻¹; the calcium carbonates prepared in Example 2 and Comparative Examples 1 to 2 are calcite-type calcium carbonates, which have an infrared characteristic peak at 883 cm⁻¹ to 885 cm⁻¹; and the calcium carbonate prepared in Comparative Example 3 is amorphous calcium carbonates, which has an infrared characteristic peak at 862 cm⁻¹.

The nano calcium carbonates prepared in Examples 1 to 4 and Comparative Examples 1 to 3 were tested, and the specific results are shown in Table 1, where the cone penetration was determined according to the method in GB/T 269, and the dropping point was tested according to the method in GB/T 3498. Meanwhile, the yield of the nano calcium carbonates prepared in Examples 1 to 4 and Comparative Examples 1 to 3 are listed in Table 1. As can be seen from Table 1, volatile organic solvents were used in the preparation process in Comparative Examples 1 to 3, which fails to meet the requirements of green environmental protection. Furthermore, the use of the volatile organic solvent in Comparative Example 1 results in a lower product yield. In contrast to an in-situ preparation method, calcium carbonate in Comparative Example 2 is prepared via a conventional crystal form conversion process, which not only requires the use of a volatile organic solvent but also does not allow for flexible control of the crystal type of calcium carbonate. Comparative Example 3 is a current conventional method for preparing amorphous calcium carbonate, resulting in a lower product yield due to the use of a volatile organic solvent. No volatile organic solvent is used during the preparation processes in Examples 1 to 4, so the preparation method is safe and environmentally friendly and enables the preparation of nano calcium carbonates with diverse structures, such as vaterite-type and calcite-type calcium carbonates, with no by-product and a high yield.

**Table 1 Test results of nano calcium carbonates prepared in Examples 1 to 4 and Comparative Examples 1 to 3**

| Indicator | Example | | | | Comparative Example | | |
|---|---|---|---|---|---|---|---|
| | 1 | 2 | 3 | 4 | 1 | 2 | 3 |
| Structure of calcium carbonate | Vaterite | Calcite | Vaterite | Vaterite | Calcite | Calcite | Amorphous |
| Infrared characteristic peak position of calcium carbonate (cm⁻¹) | 876 | 883 | 875 | 875 | 885 | 883 | 862 |
| Particle size of calcium carbonate (nm) | 100-200 | 100-200 | 100-500 | 400-600 | 100-150 | 100-200 | 10-50 |
| Yield (%) | 96.7 | 92.4 | 96.9 | 95.2 | 86.7 | 91.0 | 67.3 |
| Volatile organic solvent in the preparation process | No | No | No | No | Yes | Yes | Yes |

| | Comparative data of non-Newtonian fluid characteristics | | | | | | |
|---|---|---|---|---|---|---|---|
| Cone penetration (0.1 mm) | 280 | 235 | 305 | 340 | 277 | 286 | - |
| Dropping point (°C) | > 330 | > 330 | > 300 | > 200 | > 300 | > 330 | - |

The foregoing descriptions are merely preferred embodiments of the present disclosure, and it should be noted that for those of ordinary skill in the art, without departing from the principles of the present disclosure, some improvements and refinement may also be made, which should also be considered as the scope of the present disclosure.

## Claims

1. A method for preparing a nano calcium carbonate microcrystal dispersion system, without using a volatile organic solvent, and the nano calcium carbonate microcrystal dispersion system exhibiting colloidal stability,
wherein the method comprises:
providing a mixed reaction solution, wherein the mixed reaction solution comprises the following components in parts by mass: 50 parts to 80 parts of an oily dispersion medium, 5 parts to 30 parts of a primary organic acid, 0.1 parts to 10 parts of a secondary organic acid, 0 parts to 10 parts of an inorganic acid, and 0 parts to 10 parts of an accelerant;
mixing the mixed reaction solution and a calcium-containing inorganic substance and conducting a neutralization reaction to obtain a neutralization product feed liquid, wherein the calcium-containing inorganic substance is selected from the group consisting of calcium hydroxide and calcium oxide; and
introducing carbon dioxide into the neutralization product feed liquid, subjecting the carbon dioxide and the calcium-containing inorganic substance in the neutralization product feed liquid to a carbonization reaction, and subjecting a resulting carbonized product system to a water removal-stabilization treatment and a homogenization treatment in sequence to obtain the nano calcium carbonate microcrystal dispersion system.

2. The method of claim 1, wherein the oily dispersion medium comprises at least one selected from the group consisting of a mineral oil, a polyalphaolefin, an alkyl naphthalene, a polyether, and an ester-based synthetic oil.

3. The method of claim 2, wherein the oily dispersion medium is selected from a group consisting of the mineral oil, the polyalphaolefin, the alkyl naphthalene, the polyether, and the ester-based synthetic oil.

4. The method of claim 2, wherein the oily dispersion medium is a blend of the mineral oil and the alkyl naphthalene, with a mass ratio of the mineral oil to the alkyl naphthalene being 1-10 : 1.

5. The method of claim 2, wherein the oily dispersion medium is a blend of the polyalphaolefin and the polyether, with a mass ratio of the polyalphaolefin to the polyether being 1-10 : 1.

6. The method of claim 2, wherein the oily dispersion medium is a blend of the polyalphaolefin and the ester-based synthetic oil, with a mass ratio of the polyalphaolefin to the ester-based synthetic oil being 5-20 : 1.

7. The method of any one of claims 2 to 4, wherein the mineral oil has a viscosity of 40 mm/s to 500 mm/s.

8. The method of any one of claims 2 to 4, wherein the alkyl naphthalene has a viscosity of 10 mm/s to 200 mm/s.

9. The method of claim 2, 3, 5 or 6, wherein the polyalphaolefin has a viscosity of 60 mm/s to 400 mm/s.

10. The method of claim 1, wherein the primary organic acid comprises at least one selected from the group consisting of an alkylbenzenesulfonic acid, naphthenic acid, oleic acid, and dodecanoic acid, the alkylbenzenesulfonic acid has an alkyl with a number of carbon atoms being 8 to 35, and the naphthenic acid has an alkyl with a number of the carbon atoms being 16 to 20.

11. The method of claim 10, wherein the alkylbenzenesulfonic acid is at least one selected from the group consisting of C₁₂ alkylbenzenesulfonic acid, C₂₀ alkylbenzenesulfonic acid, and C₂₄ alkylbenzenesulfonic acid.

12. The method of claim 11, wherein the alkylbenzenesulfonic acid is a blend of the C₁₂ alkylbenzenesulfonic acid and the C₂₀ alkylbenzenesulfonic acid, with a mass ratio of the C₁₂ alkylbenzenesulfonic acid to the C₂₀ alkylbenzenesulfonic acid being 0.5-9 : 1.

13. The method of any one of claims 10 to 12, wherein the primary organic acid is selected from a group consisting of the alkylbenzenesulfonic acid, the naphthenic acid, the oleic acid, and the dodecanoic acid.

14. The method of claim 10, wherein the primary organic acid is a blend of the naphthenic acid and the oleic acid, with a mass ratio of the naphthenic acid to the oleic acid being 5-10 : 1.

15. The method of claim 1, wherein the secondary organic acid comprises at least one selected from the group consisting of 12-hydroxystearic acid, stearic acid, dimer acid, oxalic acid, acetic acid, butyric acid, succinic acid, tartaric acid, malic acid, benzoic acid, and salicylic acid.

16. The method of claim 15, wherein the secondary organic acid is selected from a group consisting of the 12-hydroxystearic acid, the stearic acid, the dimer acid, the oxalic acid, the acetic acid, the butyric acid, the succinic acid, the tartaric acid, the malic acid, the benzoic acid, and the salicylic acid.

17. The method of claim 15, wherein the secondary organic acid is a blend of the 12-hydroxystearic acid and the acetic acid, with a mass ratio of the 12-hydroxystearic acid to the acetic acid being 10 : 1-15.

18. The method of claim 15, wherein the secondary organic acid is a blend of the 12-hydroxystearic acid, the tartaric acid, and the acetic acid, with a mass ratio of the 12-hydroxystearic acid, the tartaric acid, and the acetic acid being 10 : 1-5 : 1-15.

19. The method of claim 15, wherein the secondary organic acid is a blend of the 12-hydroxystearic acid and the oxalic acid, with a mass ratio of the 12-hydroxystearic acid to the oxalic acid being 5 : 0.5-5.

20. The method of claim 1, wherein the inorganic acid comprises at least one selected from the group consisting of boric acid, phosphoric acid, and sulfuric acid.

21. The method of claim 1, wherein the accelerant comprises one or more selected from the group consisting of water, dodecanol, octadecanol, ethylene glycol, diethylene glycol, triethylene glycol, glycerol, and glucose.

22. The method of claim 21, wherein the accelerant is selected from a group consisting of the water, the dodecanol, the octadecanol, the ethylene glycol, the diethylene glycol, the triethylene glycol, the glycerol, and the glucose.

23. The method of claim 21, wherein the accelerant is a blend of the ethylene glycol and the water, with a mass ratio of the ethylene glycol to the water being 1 : 1-5.

24. The method of claim 21, wherein the accelerant is a blend of the glycerol and the diethylene glycol, with a mass ratio of the glycerol to the diethylene glycol being 1 : 0.1-2.

25. The method of claim 21, wherein the accelerant is a blend of the glycerol and the water, with a mass ratio of the glycerol to the water preferably being 1 : 1-5.

26. The method of claim 1, wherein a mass of the calcium-containing inorganic substance is 10% to 30% of a mass of the mixed reaction solution; and
the neutralization reaction is conducted at a pressure of 0 MPa to 5 MPa and a temperature of 10°C to 95°C for 0.5 hours to 4 hours.

27. The method of claim 1, wherein under a condition that a total mass of the mixed reaction solution and the calcium-containing inorganic substance is in a range of 4 kg to 5 kg, the carbon dioxide is introduced at a flow rate of 1 L/min to 50 L/min; and
the carbonization reaction is conducted at a pressure of 0 MPa to 5 MPa and a temperature of 50°C to 95°C for 1 hour to 60 hours.

28. The method of claim 1 or 27, wherein the water removal-stabilization treatment comprises:
heating a carbonized product system obtained after the carbonization reaction at a heating rate of 0.5°C/min to 2°C/min to 120°C to 180°C, and then cooling a resulting heated product at a cooling rate of 0.5°C/min to 2°C/min to 80°C to 100°C.

29. The method of claim 1, wherein the homogenization treatment is conducted in a device selected from a group consisting of a homogenizer, a colloid mill, and a three-roll mill.

30. The method of claim 29, wherein under a condition that the homogenization treatment is conducted in the homogenizer, the homogenization treatment is conducted once at a pressure of 15 MPa to 30 MPa.

31. A nano calcium carbonate microcrystal dispersion system prepared by the method of any one of claims 1 to 30, wherein nano calcium carbonate in the nano calcium carbonate microcrystal dispersion system has a particle size of 10 nm to 600 nm.

32. The nano calcium carbonate microcrystal dispersion system of claim 31, wherein the nano calcium carbonate in the nano calcium carbonate microcrystal dispersion system has the particle size of 100 nm to 600 nm.

33. The nano calcium carbonate microcrystal dispersion system of claim 31 or 32, wherein the nano calcium carbonate is selected from the group consisting of vaterite-type calcium carbonate and calcite-type calcium carbonate.

34. Use of the nano calcium carbonate microcrystal dispersion system of any one of claims 31 to 33 in lubricating greases, antirust agents, extreme-pressure anti-wear additives, or shear-thickening fluids.
